# EUROPÄISCHE PATENTSCHRIFT

(11) **EP 4 310 344 B1**
(45) Veröffentlichungstag und Bekanntmachung des Hinweises auf die Patenterteilung: **05.11.2025**
(21) Anmeldenummer: 23182565.4
(22) Anmeldetag: 30.06.2023
(51) Int. Cl.: F15B 11/16, A01B 63/10

(54) **LASTGESTEUERTE HYDRAULIKVERSORGUNG FÜR EIN AN EINEM LANDWIRTSCHAFTLICHEN TRAKTOR ANGEBRACHTES ANBAUGERÄT**
LOAD-CONTROLLED HYDRAULIC SUPPLY FOR AN IMPLEMENT MOUNTED ON AN AGRICULTURAL TRACTOR
ALIMENTATION HYDRAULIQUE COMMANDÉE EN CHARGE POUR UN OUTIL MONTÉ SUR UN TRACTEUR AGRICOLE

(30) Priorität: 18.07.2022 DE 102022117878; 18.07.2022 DE 102022117880
(43) Veröffentlichungstag der Anmeldung: 24.01.2024
(73) Patentinhaber: Deere & Company, Moline, IL 61265 (US)
(72) Erfinder: BILLICH, Manuel, 68163 Mannheim (DE)
(74) Vertreter: Dehnhardt, Florian Christopher

(56) Entgegenhaltungen:
- EP-A1- 2 863 068
- EP-A1- 3 584 450
- EP-A1- 3 957 866
- EP-A2- 3 567 167
- WO-A1-2005/024245
- DE-A1- 102014 004 337
- US-B1- 11 261 582

## Beschreibung

Die Erfindung betrifft eine lastgesteuerte Hydraulikversorgung für ein an einem landwirtschaftlichen Traktor angebrachtes Anbaugerät, umfassend eine von einer hydraulischen Hochdruckquelle gespeiste Versorgungsleitung, eine in ein Hydraulikreservoir mündende Rücklaufleitung sowie eine Lastmeldeleitung, wobei die Hydraulikversorgung einen durch die Versorgungsleitung hindurchtretenden Volumenstrom nach Maßgabe einer an der Lastmeldeleitung anliegenden Druckrückmeldung bereitstellt.

In den letzten Jahren ist ein zunehmender Trend zu landwirtschaftlichen Anbaugeräten mit immer komplexer werdenden Arbeitsfunktionen zu beobachten. Typischerweise dienen zur Ausführung der Arbeitsfunktionen hydraulische Aktoren in Gestalt unterschiedlichster Stell- und/oder Antriebseinrichtungen. Mit zunehmender Komplexität der Arbeitsfunktionen steigt im Allgemeinen auch die Anzahl der benötigten hydraulischen Aktoren und damit die Anzahl der seitens des landwirtschaftlichen Traktors zu ihrer hydraulischen Versorgung vorzusehenden Hydraulikanschlüsse. Da letztere naturgemäß begrenzt ist, gewinnen sogenannte Power-Beyond-Schnittstellen mehr und mehr an Bedeutung. Diese sind in ISO17567 genormt und sehen eine bedarfsabhängige Versorgung daran angeschlossener hydraulischer Verbraucher mit Hydraulikflüssigkeit vor. Hierzu ist die Hydraulikversorgung lastgesteuert als sogenanntes Load-Sensing-System ausgebildet, wobei die Power-Beyond-Schnittstelle aus insgesamt vier Hydraulikanschlüssen besteht:
P - Versorgungsanschluss
LS - Lastmeldeanschluss zur Druckrückmeldung
R - Rücklaufanschluss
D - Drainageanschluss

Der Rücklaufanschluss dient ebenso wie der Drainageanschluss lediglich dem Rückfluss der Hydraulikflüssigkeit in ein Hydraulikreservoir des landwirtschaftlichen Traktors, beide Anschlüsse werden daher vorliegend nicht weiter thematisiert. Der Fokus liegt vielmehr auf dem Versorgungs- sowie dem Lastmeldeanschluss, denn diese Anschlüsse sind für die eigentliche Funktion der lastgesteuerten Hydraulikversorgung maßgeblich. So wird von der hydraulischen Hochdruckquelle, bei der es sich insbesondere um eine aus dem Hydraulikreservoir gespeiste Verstellpumpe handelt, über den Versorgungsanschluss ein nach Maßgabe des an dem Rückmeldeanschluss anliegenden Lastmeldedrucks angepasster Volumenstrom bereitgestellt. Mögliche Begrenzungen der Hydraulikresourcen der hydraulischen Hochdruckquelle bleiben insofern außer Acht. Dementsprechend kann es zu einer zu Funktionsbeeinträchtigungen führenden Unterversorgung sicherheitsrelevanter Hydraulikfunktionen des landwirtschaftlichen Traktors kommen, falls diese von der selben hydraulischen Hochdruckquelle mit Hydraulikflüssigkeit versorgt werden. Hierzu zählt unter anderem der Betrieb einer hydraulischen Lenk- oder Bremsanlage.

Eine lastgesteuerte Hydraulikversorgung für ein an einem landwirtschaftlichen Traktor angebrachtes Anbaugerät ist aus der EP 3 584 450 A1 und EP 3 567 167 A2 bekannt.

Angesichts dessen ist es Aufgabe der vorliegenden Erfindung, eine lastgesteuerte Hydraulikversorgung der eingangs genannten Art dahingehend auszubilden, dass diese den begrenzten Hydraulikresourcen der hydraulischen Hochdruckquelle Rechnung trägt.

Diese Aufgabe wird durch eine lastgesteuerte Hydraulikversorgung mit den Merkmalen des Patentanspruchs 1 gelöst.

Die lastgesteuerte Hydraulikversorgung für ein an einem landwirtschaftlichen Traktor angebrachtes Anbaugerät umfasst eine hydraulische Hochdruckquelle, eine von der hydraulischen Hochdruckquelle gespeiste Versorgungsleitung, eine in ein Hydraulikreservoir mündende Rücklaufleitung sowie eine Lastmeldeleitung, wobei die Hydraulikversorgung einen durch die Versorgungsleitung hindurchtretenden Volumenstrom nach Maßgabe einer an der Lastmeldeleitung anliegenden Druckrückmeldung bereitstellt. Erfindungsgemäß ist in der Versorgungsleitung ein druckkompensiertes Steuerventil mit einer Betätigungseinrichtung zur Einstellung des Volumenstroms vorhanden.

Auf diese Weise ist es möglich, den durch das druckkompensierte Steuerventil hindurchtretenden Volumenstrom durch entsprechende Ansteuerung der Betätigungseinrichtung derart vorzugeben, dass eine Priorisierung von im landwirtschaftlichen Traktor befindlichen hydraulischen Verbrauchern erfolgt. Dies erlaubt es, den begrenzten Hydraulikresourcen der hydraulischen Hochdruckquelle dahingehend Rechnung zu tragen, dass eine zu Funktionsbeeinträchtigungen führende Unterversorgung sicherheitsrelevanter Hydraulikfunktionen des landwirtschaftlichen Traktors, wie sie unter anderem der Betrieb einer hydraulischen Lenk- oder Bremsanlage darstellt, vermieden wird. Das druckkompensierte Steuerventil kann hierbei aus einer Kombination eines 2/2-Wege-Proportionalventils mit einem Druckregelventil gebildet sein, wobei das Druckregelventil einen auslassseitigen Hydraulikdruck mit einem einlassseitigen Hydraulikdruck am 2/2-Wege-Proportionalventil vergleicht und auf einen festen Differenzdruck einstellt. Solchermaßen hält das 2/2-Wege-Proportionalventil den sich aus seiner jeweiligen Öffnungsstellung ergebenden Volumenstrom auch im Falle von Lastschwankungen der hydraulischen Aktoren und/oder von betriebsbedingten Druckschwankungen innerhalb der Hydraulikversorgung weitgehend konstant. Zur Vorgabe des Volumenstroms lässt sich das 2/2-Wege-Proportionalventil mittels der Betätigungseinrichtung, die beispielsweise elektrisch oder mechanisch ansteuerbar ist, entgegen einer mittels eines Federelements erzeugten Rückstellkraft in seine geöffnete Stellung verbringen.

Vorteilhafte Weiterbildungen der erfindungsgemäßen lastgesteuerten Hydraulikversorgung gehen aus den Unteransprüchen hervor.

Mit hydraulischen Aktoren ausgestattete Anbaugeräte übermitteln über die Lastmeldeleitung häufig einen überhöhten, d.h. den tatsächlichen Versorgungsbedarf unangemessenen Lastmeldedruck an die Hydraulikversorgung. Dies führt letztlich dazu, dass die Hydraulikversorgung dazu veranlasst wird, einen den tatsächlichen Bedarf der hydraulischen Aktoren übersteigenden Versorgungsdruck zu erzeugen und über die Versorgungsleitung bereitzustellen.

Um die damit verbundenen Effizienzeinbußen beim Betrieb der Hydraulikversorgung zu unterbinden, besteht daher die Möglichkeit, dass die Lastmeldeleitung mit einer Einrichtung zur Druckbegrenzung in Verbindung steht. Der Umfang der Druckbegrenzung wird hierbei an den zu erwartenden hydraulischen Versorgungsbedarf der hydraulischen Aktoren angepasst und ist üblicherweise für jedes Anbaugerätemodell spezifisch.

Hierbei kann die Einrichtung zur Druckbegrenzung ein in ein Hydraulikreservoir mündendes Druckbegrenzungsventil oder ein in der Lastmeldeleitung liegendes Druckreduzierventil umfassen.

Das Druckbegrenzungsventil ist einlassseitig an der Lastmeldeleitung angeschlossen und steht auslassseitig mit dem Hydraulikreservoir in Verbindung. Bei Überschreiten eines vorgegebenen Druckschwellenwerts nimmt dieses entgegen einer mittels eines Federelements erzeugten Rückstellkraft eine geöffnete Stellung ein, sodass eine entsprechende Druckentlastung durch Abfließen von Hydraulikflüssigkeit aus der Lastmeldeleitung in Richtung des Hydraulikreservoirs erfolgt.

Ist aus Effizienzgründen ein (weiterer) Abflusspfad in Richtung des Hydraulikreservoirs unerwünscht, so ist anstelle des Druckbegrenzungsventils der Einsatz eines Druckreduzierventils zu bevorzugen. Das Druckreduzierventil wird unter der Wirkung einer mittels eines Federelements erzeugten Rückstellkraft in eine geöffnete Stellung vorgespannt und bei Überschreiten eines auslassseitig vorgegebenen Druckschwellenwerts in eine geschlossene Stellung gedrängt, sodass ein weiterer Hindurchtritt von Hydraulikflüssigkeit unterbunden wird.

Der Druckschwellenwert wird abhängig vom jeweiligen Anbaugerätemodell individuell vorgegeben und liegt typischerweise in der Größenordnung von 100 bis 190 bar.

Um beim Öffnen des Druckbegrenzungsventils einen plötzlichen bzw. unkontrollierten Druckabfall in der Lastmeldeleitung zu unterbinden, ist es denkbar, dass das Druckbegrenzungsventil über ein in Serie geschaltetes Flussbegrenzungselement mit der Lastmeldeleitung kommuniziert. Das Flussbegrenzungselement kann hierbei dem Druckbegrenzungsventil in der Lastmeldeleitung vor- oder nachgeschaltet sein. Bei dem Flussbegrenzungselement handelt es sich typischerweise um eine Blende oder eine Drossel.

Vorzugsweise ist die Einrichtung zur Druckbegrenzung mittels einer weiteren Betätigungseinrichtung bezüglich des vorgegebenen Druckschwellenwerts einstellbar. Für den Fall, dass es sich bei der Einrichtung zur Druckbegrenzung um ein Druckbegrenzungsventil oder ein Druckreduzierventil handelt, ist die weitere Betätigungseinrichtung zur Beeinflussung der Rückstellkraft des jeweiligen Federelements ausgebildet und zu diesem Zwecke elektrisch oder mechanisch ansteuerbar. Andererseits sind auch Betriebssituationen möglich, in denen es zu einer Unterversorgung der hydraulischen Aktoren des Anbaugeräts kommt, vor allem dann, wenn ein unzureichender Lastmeldedruck an die Hydraulikversorgung des landwirtschaftlichen Traktors übermittelt wird. Unter solchen Umständen ist es vorstellbar, dass eine Ventilanordnung zur variablen Erhöhung eines an der Lastmeldeleitung extern anliegenden Lastmeldedrucks vorhanden ist, die diesen auf ein zu einem angemessenen Volumenstrom führendes Niveau anhebt, typischerweise um bis zu 40 bar.

Erfindungsgemäß umfasst die Ventilanordnung ein mittels des extern anliegenden Lastmeldedrucks pilotbetätigtes 2/2 Wegeventil, wobei das 2/2-Wegeventil einlassseitig an die hydraulische Hochdruckquelle angeschlossen ist und mittels einer die Pilotbetätigung unterstützenden Stellkraft eines Federelements in seine geöffnete Stellung vorgespannt wird. Das 2/2-Wegeventil bildet damit ein Verstärkerventil, bei dem sich der Umfang der Druckerhöhung unmittelbar aus der jeweiligen Stellkraft der Federelements ergibt. Bevorzugt lässt sich diese mittels einer elektrisch oder mechanisch ansteuerbaren Betätigungseinrichtung verändern, sodass eine individuelle Anhebung des Lastmeldedrucks möglich ist, die den spezifischen Bedürfnissen eines jeweiligen Anbaugerätemodells Rechnung trägt.

Die Verwendung eines pilotbetätigten 2/2-Wegeventils als Verstärkerventil führt nicht nur zu einem besonders einfachen Aufbau der Ventilanordnung, sondern verhindert zugleich, dass ein äußerer Eintrag von Kontaminationen über die Lastmeldeleitung in die Hydraulikversorgung des landwirtschaftlichen Traktors erfolgt. Denn der extern anliegende Lastmeldedruck dient lediglich der Pilotbetätigung des 2/2-Wegeventils, eine unmittelbare Verbindung zur Hydraulikversorgung des landwirtschaftlichen Traktors besteht nicht.

Zusätzlich kann dem 2/2-Wegeventil ein als weiteres 2/2-Wegeventil ausgebildetes Freigabeventil in Serie geschaltet sein, wobei das weitere 2/2-Wegeventil mittels des extern anliegenden Lastmeldedrucks derart pilotbetätigt wird, dass dieses bei Überschreiten eines vorgegebenen Druckschwellenwerts eine geöffnete Stellung einnimmt. Das weitere 2/2-Wegeventil stellt sicher, dass der mittels des Verstärkerventils erzeugte erhöhte Lastmeldedruck ausschließlich dann intern an die Hydraulikversorgung übermittelt wird, wenn eine entsprechende externe (anbaugeräteseitige) Versorgungsanforderung an der Lastmeldeleitung anliegt. Der Druckschwellenwert ergibt sich hierbei aus der Rückstellkraft eines Federelements, das derart dimensioniert ist, dass das weitere 2/2-Wegeventil in unbetätigtem Zustand verlässlich seine geschlossene Stellung einnimmt. Der sich insofern ergebende Druckschwellenwert liegt typischerweise in der Größenordnung von 2 bis 4 bar.

Im Ergebnis erlaubt die erfindungsgemäße lastgesteuerte Hydraulikversorgung im Rahmen ihrer unterschiedlichen Ausgestaltungen eine umfassende Korrektur von Fehlanpassungen zwischen der lastgesteuerten Hydraulikversorgung in einem landwirtschaftlichen Traktor sowie einem anbaugeräteseitigen Hydrauliksystem, das dem Betrieb zugehöriger hydraulischer Aktoren dient.

Die erfindungsgemäße lastgesteuerte Hydraulikversorgung für ein an einem landwirtschaftlichen Traktor angebrachtes Anbaugerät wird im Folgenden anhand der Zeichnungen näher beschrieben. Dabei beziehen sich identische Bezugszeichen auf übereinstimmende oder bezüglich ihrer Funktion vergleichbare Komponenten. Es zeigen:
- Fig. 1: ein schematisch dargestelltes erstes Ausführungsbeispiel der erfindungsgemäßen lastgesteuerten Hydraulikversorgung, und
- Fig. 2: ein schematisch dargestelltes zweites Ausführungsbeispiel der erfindungsgemäßen lastgesteuerten Hydraulikversorgung.

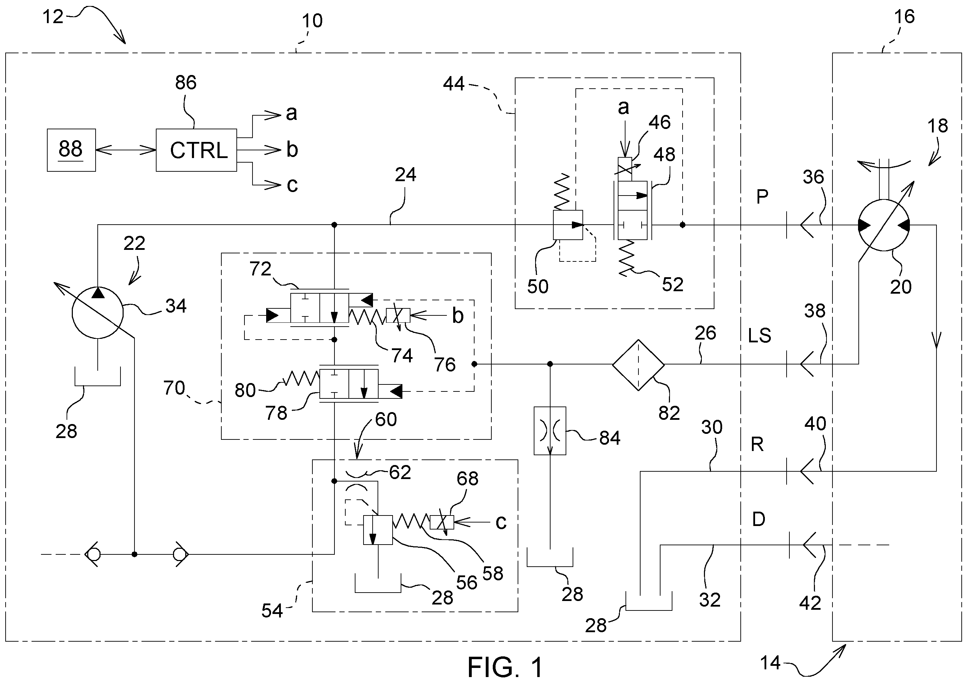

Fig. 1 zeigt ein erstes Ausführungsbeispiel der erfindungsgemäßen lastgesteuerten Hydraulikversorgung.

Die in Fig. 1 schematisch dargestellte Hydraulikversorgung 10 dient dem Betrieb eines an einem landwirtschaftlichen Traktor 12 angebrachten Anbaugeräts 14, genauer gesagt wenigstens eines von einem anbaugeräteseitigen Hydrauliksystem 16 umfassten hydraulischen Aktors 18 in Gestalt einer stellvertretend als Hydraulikmotor dargestellten Stell- und/oder Antriebseinrichtung 20, mittels derer sich eine zugehörige Arbeitsfunktion des Anbaugeräts 14 ausführen lässt.

Die lastgesteuerte Hydraulikversorgung 10 bildet eine sogenannte Power-Beyond-Schnittstelle mit insgesamt vier Hydraulikanschlüssen:
P - Versorgungsanschluss
LS - Lastmeldeanschluss zur Druckrückmeldung
R - Rücklaufanschluss
D - Drainageanschluss

Jeder der Hydraulikanschlüsse P, LS, R und D geht in eine zugehörige Hydraulikleitung über, genauer gesagt in eine von einer hydraulischen Hochdruckquelle 22 gespeiste Versorgungsleitung 24, eine Lastmeldeleitung 26 sowie eine in ein Hydraulikreservoir 28 mündende Rücklauf- bzw. Drainageleitung 30, 32.

Der Rücklaufanschluss R dient ebenso wie der Drainageanschluss D lediglich dem Rückfluss der Hydraulikflüssigkeit in das Hydraulikreservoir 28 des landwirtschaftlichen Traktors 12, beide Anschlüsse werden daher vorliegend nicht weiter thematisiert. Der Fokus liegt vielmehr auf dem Versorgungs- sowie dem Lastmeldeanschluss P, LS, denn diese Anschlüsse sind für die eigentliche Funktion der lastgesteuerten Hydraulikversorgung 10 maßgeblich. So wird von der hydraulischen Hochdruckquelle 22, bei der es sich um eine aus dem Hydraulikreservoir 28 gespeiste Verstellpumpe 34 handelt, über den Versorgungsanschluss P ein nach Maßgabe des an dem Rückmeldeanschluss LS anliegenden Lastmeldedrucks angepasster Volumenstrom bereitgestellt.

Mit anderen Worten bildet die lastgesteuerte Hydraulikversorgung 10 ein sogenanntes Load-Sensing-System, das einen durch die Versorgungsleitung 24 in Richtung des Versorgungsanschluss P hindurchtretenden Volumenstrom nach Maßgabe einer an der Lastmeldeleitung 26 anliegenden Druckrückmeldung bereitstellt.

Das zum Betrieb des wenigstens einen hydraulischen Aktors 18 vorgesehene anbaugeräteseitige Hydrauliksystem 16 ist mittels zugehöriger Hydraulikschläuche bzw. -kuppler 36, 38, 40, 42 lösbar mit der lastgesteuerten Hydraulikversorgung 10 verbunden.

Des Weiteren ist in der Versorgungsleitung 24 ein druckkompensiertes Steuerventil 44 mit einer ersten Betätigungseinrichtung 46 zur Einstellung des Volumenstroms vorhanden.

Das druckkompensierte Steuerventil 44 ist aus einer Kombination eines 2/2-Wege-Proportionalventils 48 mit einem Druckregelventil 50 gebildet, wobei das Druckregelventil 50 einen auslassseitigen Hydraulikdruck mit einem einlassseitigen Hydraulikdruck am 2/2-Wege-Proportionalventil 48 vergleicht und auf einen festen Differenzdruck einstellt. Solchermaßen hält das 2/2-Wege-Proportionalventil 48 den sich aus seiner jeweiligen Öffnungsstellung ergebenden Volumenstrom auch im Falle von Lastschwankungen des wenigstens einen hydraulischen Aktors 18 und/oder von betriebsbedingten Druckschwankungen innerhalb der Hydraulikversorgung 10 weitgehend konstant. Zur Vorgabe des Volumenstroms lässt sich das 2/2-Wege-Proportionalventil 48 durch elektrische Ansteuerung der ersten Betätigungseinrichtung 46 entgegen einer mittels eines Federelements 52 erzeugten Rückstellkraft in seine geöffnete Stellung verbringen.

Mit hydraulischen Aktoren ausgestattete Anbaugeräte übermitteln über die Lastmeldeleitung 26 häufig einen überhöhten, d.h. den tatsächlichen Versorgungsbedarf unangemessenen Lastmeldedruck an die Hydraulikversorgung 10. Dies führt letztlich dazu, dass die Hydraulikversorgung 10 dazu veranlasst wird, einen den tatsächlichen Bedarf der hydraulischen Aktoren übersteigenden Versorgungsdruck zu erzeugen über die Versorgungsleitung 24 am Versorgungsanschluss P bereitzustellen. Um die damit verbundenen Effizienzeinbußen beim Betrieb der Hydraulikversorgung 10 zu unterbinden, steht die Lastmeldeleitung 26 mit einer Einrichtung zur Druckbegrenzung 54 in Verbindung. Der Umfang der Druckbegrenzung wird hierbei an den zu erwartenden hydraulischen Versorgungsbedarf der hydraulischen Aktoren angepasst und ist üblicherweise für jedes Anbaugerätemodell spezifisch.

Gemäß dem in Fig. 1 wiedergegebenen ersten Ausführungsbeispiel der lastgesteuerten Hydraulikversorgung 10 umfasst die Einrichtung zur Druckbegrenzung 54 ein in das Hydraulikreservoir 28 mündendes Druckbegrenzungsventil 56.

Das Druckbegrenzungsventil 56 ist einlassseitig an der Lastmeldeleitung 26 angeschlossen und steht auslassseitig mit dem Hydraulikreservoir 28 in Verbindung. Bei Überschreiten eines vorgegebenen Druckschwellenwerts nimmt dieses entgegen einer mittels eines Federelements 58 erzeugten Rückstellkraft eine geöffnete Stellung ein, sodass eine entsprechende Druckentlastung durch Abfließen von Hydraulikflüssigkeit aus der Lastmeldeleitung 26 in Richtung des Hydraulikreservoirs 28 erfolgt.

Um beim Öffnen des Druckbegrenzungsventils 56 einen plötzlichen bzw. unkontrollierten Druckabfall in der Lastmeldeleitung 26 zu unterbinden, ist vorgesehen, dass das Druckbegrenzungsventil 56 über ein in Serie geschaltetes Flussbegrenzungselement 60 mit der Lastmeldeleitung 26 kommuniziert. Beispielsgemäß ist das Flussbegrenzungselement 60 in Gestalt einer Blende 62 dem Druckbegrenzungsventil 56 in der Lastmeldeleitung 26 vorgeschaltet, dieses kann dem Druckbegrenzungsventil 56 jedoch auch nachgeschaltet sein.

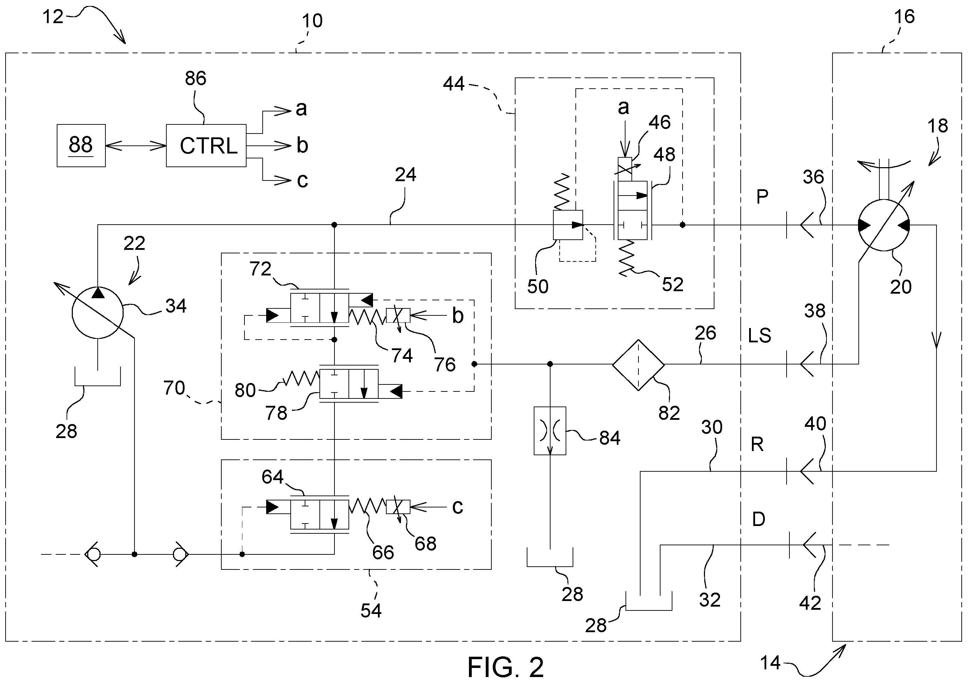

Entsprechend einem in Fig. 2 wiedergegebenen zweiten Ausführungsbeispiel der erfindungsgemäßen lastgesteuerten Hydraulikversorgung 10 umfasst die Einrichtung zur Druckbegrenzung 54 anstelle eines Druckbegrenzungsventils 56 ein in der Lastmeldeleitung 26 liegendes Druckreduzierventil 64.

Bezüglich der übrigen Bestandteile bzw. Komponenten stimmen die beiden Ausführungsbeispiele überein.

Das Druckreduzierventil 64 wird unter der Wirkung einer mittels eines Federelements 66 erzeugten Rückstellkraft in eine geöffnete Stellung vorgespannt und bei Überschreiten eines auslassseitig vorgegebenen Druckschwellenwerts in eine geschlossene Stellung gedrängt, sodass ein weiterer Hindurchtritt von Hydraulikflüssigkeit unterbunden wird.

Sowohl das Druckbegrenzungsventil 56 wie auch das Druckreduzierventil 64 ist mittels einer jeweiligen zweiten Betätigungseinrichtung 68 bezüglich des vorgegebenen Druckschwellenwerts einstellbar. Hierzu ist die zweite Betätigungseinrichtung 68 derart ausgebildet, dass sich die Rückstellkraft des Federelements 58, 66 durch elektrische Ansteuerung der zweiten Betätigungseinrichtung 68 gezielt beeinflussen lässt.

Der Druckschwellenwert wird abhängig vom jeweiligen Anbaugerätemodell individuell vorgegeben und liegt typischerweise in der Größenordnung von 100 bis 190 bar.

Die vorstehend beschriebenen Maßnahmen werden Betriebssituationen gerecht, in denen es aufgrund von Fehlanpassungen zwischen der lastgesteuerten Hydraulikversorgung 10 und dem anbaugeräteseitigen Hydrauliksystem 16 zu einer Überversorgung des wenigstens einen Aktors 18 mit Hydraulikflüssigkeit kommt. Andererseits sind auch zu einer Unterversorgung führende Betriebssituationen möglich, vor allem dann, wenn ein unzureichender Lastmeldedruck an die Hydraulikversorgung 10 des landwirtschaftlichen Traktors 12 übermittelt wird. Dementsprechend ist eine Ventilanordnung 70 zur variablen Erhöhung eines an der Lastmeldeleitung 26 extern, also am Lastmeldeanschluss LS anliegenden Lastmeldedrucks vorhanden, die es erlaubt, diesen auf ein zu einem angemessenen Volumenstrom führendes Niveau anzuheben, typischerweise um bis zu 40 bar.

Hierzu umfasst die Ventilanordnung 70 ein mittels des extern anliegenden Lastmeldedrucks pilotbetätigtes 2/2-Wegeventil 72, wobei das 2/2-Wegeventil 72 einlassseitig an die hydraulische Hochdruckquelle 22 angeschlossen ist und mittels einer die Pilotbetätigung unterstützenden Stellkraft eines Federelements 74 in seine geöffnete Stellung vorgespannt wird.

Das 2/2-Wegeventil 72 bildet damit ein Verstärkerventil, bei dem sich der Umfang der Druckerhöhung unmittelbar aus der jeweiligen Stellkraft der Federelements 74 ergibt. Auslassseitig erfolgt eine der Stellkraft des Federelements 74 entgegengesetzte Pilotbetätigung des 2/2-Wegeventils 72, sodass sich an diesem stabile Druckverhältnisse einstellen.

Die Stellkraft lässt sich mittels einer elektrisch ansteuerbaren dritten Betätigungseinrichtung 76 verändern, sodass eine individuelle Anhebung des Lastmeldedrucks möglich ist, die den spezifischen Bedürfnissen eines jeweiligen Anbaugerätemodells Rechnung trägt.

Zusätzlich ist dem 2/2-Wegeventil 72 ein als weiteres 2/2-Wegeventil 78 ausgebildetes Freigabeventil in Serie geschaltet, wobei das weitere 2/2-Wegeventil 78 mittels des extern anliegenden Lastmeldedrucks derart pilotbetätigt wird, dass dieses bei Überschreiten eines vorgegebenen Druckschwellenwerts eine geöffnete Stellung einnimmt. Das weitere 2/2-Wegeventil 78 stellt sicher, dass der mittels des Verstärkerventils, also des 2/2-Wegeventils 72 erzeugte erhöhte Lastmeldedruck ausschließlich dann intern an die Hydraulikversorgung 10 übermittelt wird, wenn eine entsprechende externe (anbaugeräteseitige) Versorgungsanforderung an der Lastmeldeleitung 26 anliegt. Der Druckschwellenwert ergibt sich hierbei aus der Rückstellkraft eines weiteren Federelements 80, das derart dimensioniert ist, dass das weitere 2/2-Wegeventil 78 in unbetätigtem Zustand verlässlich seine geschlossene Stellung einnimmt. Der sich insofern ergebende Druckschwellenwert liegt typischerweise in der Größenordnung von 2 bis 4 bar. Beispielsgemäß ist das weitere 2/2-Wegeventil 78 dem 2/2-Wegeventil 72 vorgeschaltet, dieses kann aber auch dem 2/2-Wegeventil 72 nachgeschaltet sein.

Optional ist an der Lastmeldeleitung 26 neben einem unmittelbar hinter dem Lastmeldeanschluss LS angeordneten Filterelement 82, das einen unerwünschten Eintrag von Kontaminationen in Richtung der pilotbetätigten 2/2-Wegeventile 72, 78 unterbindet, ein eine Blende 84 zur Entlastung der Lastmeldeleitung 26 in Richtung des Hydraulikreservoirs 28 angeordnet.

Die zur Behebung möglicher Fehlanpassungen zwischen Hydraulikversorgung 10 und anbaugeräteseitigem Hydrauliksystem 16 erforderliche elektrische Ansteuerung der jeweiligen Betätigungseinrichtungen 46, 68, 76 für ein bestimmtes Anbaugerätemodell erfolgt mittels einer mikroprozessorgesteuerten Kontrolleinheit 86, wobei das betreffende Anbaugerätemodell über eine mit der Kontrolleinheit 86 kommunizierende Nutzerschnittstelle 88 ausgewählt wird.

Ausgehend von den Darstellungen in Fig. 1 bzw. Fig. 2 wirkt die zweite Betätigungseinrichtung 68 zur Beeinflussung der Rückstellkraft mechanisch unmittelbar auf das jeweilige Federelement 58, 66 ein. Davon abweichend kann jedoch auch vorgesehen sein, dass sich mittels der zweiten Betätigungseinrichtung 68 am Druckbegrenzungsventil 56 bzw. am Druckreduzierventil 64 eine der Rückstellkraft entgegenwirkende Gegenkraft erzeugen lässt, wobei in das Federelement 58, 66 unmittelbar nicht eingegriffen wird. Ähnliches gilt auch für die dritte Betätigungseinrichtung 76 sowie das insofern zugehörige Federelement 74.

## Patentansprüche

1. Lastgesteuerte Hydraulikversorgung für ein an einem landwirtschaftlichen Traktor angebrachtes Anbaugerät, umfassend eine hydraulische Hochdruckquelle (22), eine von der hydraulischen Hochdruckquelle (22) gespeiste Versorgungsleitung (24), eine in ein Hydraulikreservoir (28) mündende Rücklaufleitung (30) sowie eine Lastmeldeleitung (26), wobei die Hydraulikversorgung (10) einen durch die Versorgungsleitung (24) hindurchtretenden Volumenstrom nach Maßgabe einer an der Lastmeldeleitung (26) anliegenden Druckrückmeldung bereitstellt, wobei in der Versorgungsleitung (24) ein druckkompensiertes Steuerventil (44) mit einer Betätigungseinrichtung (46) zur Einstellung des Volumenstroms vorhanden ist, wobei eine Ventilanordnung (70) zur variablen Erhöhung eines an der Lastmeldeleitung (26) extern anliegenden Lastmeldedrucks vorhanden ist, **dadurch gekennzeichnet, dass** die Ventilanordnung (70) ein mittels des extern anliegenden Lastmeldedrucks pilotbetätigtes 2/2-Wegeventil (72) umfasst, wobei das 2/2-Wegeventil (72) einlassseitig an die hydraulische Hochdruckquelle (22) angeschlossen ist und mittels einer die Pilotbetätigung unterstützenden Stellkraft eines Federelements (74) in seine geöffnete Stellung vorgespannt wird.

2. Hydraulikversorgung nach Anspruch 1, **dadurch gekennzeichnet, dass** die Lastmeldeleitung (26) mit einer Einrichtung zur Druckbegrenzung (54) in Verbindung steht.

3. Hydraulikversorgung nach Anspruch 2, **dadurch gekennzeichnet, dass** die Einrichtung zur Druckbegrenzung (54) ein in das Hydraulikreservoir (28) mündendes Druckbegrenzungsventil (56) oder ein in der Lastmeldeleitung (26) liegendes Druckreduzierventil (64) umfasst.

4. Hydraulikversorgung nach Anspruch 3, **dadurch gekennzeichnet, dass** das Druckbegrenzungsventil (56) über ein in Serie geschaltetes Flussbegrenzungselement (60) mit der Lastmeldeleitung (26) kommuniziert.

5. Hydraulikversorgung nach wenigstens einem der Ansprüche 2 bis 4, **dadurch gekennzeichnet, dass** die Einrichtung zur Druckbegrenzung (54) mittels einer weiteren Betätigungseinrichtung (68) bezüglich des vorgegebenen Druckschwellenwerts einstellbar ist.

6. Hydraulikversorgung nach wenigstens einem der vorhergehenden Ansprüche 1 bis 5, **dadurch gekennzeichnet, dass** dem 2/2-Wegeventil (72) ein als weiteres 2/2-Wegeventil (78) ausgebildetes Freigabeventil in Serie geschaltet ist, wobei das weitere 2/2-Wegeventil (78) mittels des extern anliegenden Lastmeldedrucks derart pilotbetätigt wird, dass dieses bei Überschreiten eines vorgegebenen Druckschwellenwerts eine geöffnete Stellung einnimmt.

## Claims

1. Load-controlled hydraulic supply for an attachment attached to an agricultural tractor, comprising a hydraulic high-pressure source (22), a supply line (24) fed by the hydraulic high-pressure source (22), a return line (30) leading into a hydraulic reservoir (28), and a load-indicating line (26), wherein the hydraulic supply (10) provides a volume flow, which passes through the supply line (24), in accordance with pressure feedback prevailing at the load-indicating line (26), wherein in the supply line (24) there is a pressure-compensated control valve (44) with an actuation device (46) for adjusting the volume flow, wherein there is a valve arrangement (70) for variably increasing a load-indicating pressure prevailing externally at the load-indicating line (26), **characterized in that** the valve arrangement (70) comprises a 2/2-way valve (72) which is pilot-actuated by means of the externally prevailing load-indicating pressure, wherein the 2/2-way valve (72) is connected on the inlet side to the hydraulic high-pressure source (22) and is prestressed into its open position by means of an actuating force of a spring element (74) that assists the pilot actuation.

2. Hydraulic supply according to Claim 1, **characterized in that** the load-indicating line (26) is connected to a device for pressure limiting (54).

3. Hydraulic supply according to Claim 2, **characterized in that** the device for pressure limiting (54) comprises a pressure-limiting valve (56) leading into the hydraulic reservoir (28) or a pressure-reducing valve (64) located in the load-indicating line (26).

4. Hydraulic supply according to Claim 3, **characterized in that** the pressure-limiting valve (56) communicates with the load-indicating line (26) via a series-connected flow-limiting element (60).

5. Hydraulic supply according to at least one of Claims 2 to 4, **characterized in that** the device for pressure limiting (54) is adjustable with regard to the predetermined pressure threshold value by means of a further actuation device (68).

6. Hydraulic supply according to at least one of the preceding Claims 1 to 5, **characterized in that** an enable valve designed as a further 2/2-way valve (78) is connected in series with the 2/2-way valve (72), wherein the further 2/2-way valve (78) is pilot-actuated by means of the externally prevailing load-indicating pressure in such a manner that said further 2/2-way valve takes up an open position when a predetermined pressure threshold value is exceeded.

## Revendications

1. Alimentation hydraulique à charge commandée pour un accessoire installé sur un tracteur agricole, comprenant une source hydraulique haute pression (22), une conduite d'alimentation (24) alimentée par la source hydraulique haute pression (22), une conduite de retour (30) débouchant dans un réservoir hydraulique (28) ainsi qu'une conduite de signalisation de charge (26), l'alimentation hydraulique (10) fournissant un débit volumique traversant la conduite d'alimentation (24) en fonction d'une rétroaction de pression appliquée sur la conduite de signalisation de charge (26), une soupape de commande (44) à compensation de pression avec un dispositif d'actionnement (46), destinée à régler le débit volumique étant prévue dans la conduite d'alimentation (24), un ensemble de soupapes (70) étant présent pour augmenter de manière variable une pression de signalisation de charge appliquée de manière externe sur la conduite de signalisation de charge (26), **caractérisée en ce que** l'ensemble de soupapes (70) comprend une soupape à 2/2 voies (72) pilotée au moyen de la pression de signalisation de charge appliquée de manière externe, la soupape à 2/2 voies (72) étant raccordée côté entrée à la source hydraulique haute pression (22) et étant précontrainte dans sa position ouverte au moyen d'une force de réglage d'un élément de ressort (74) soutenant l'actionnement piloté.

2. Alimentation hydraulique selon la revendication 1, **caractérisée en ce que** la conduite de signalisation de charge (26) est reliée à un dispositif de limitation de pression (54).

3. Alimentation hydraulique selon la revendication 2, **caractérisée en ce que** le dispositif de limitation de pression (54) comprend une soupape de limitation de pression (56) débouchant dans le réservoir hydraulique (28) ou une soupape de réduction de pression (64) située dans la conduite de signalisation de charge (26).

4. Alimentation hydraulique selon la revendication 3, **caractérisée en ce que** la soupape de limitation de pression (56) communique avec la conduite de signalisation de charge (26) par un élément de limitation de flux (60) branché en série.

5. Alimentation hydraulique selon au moins l'une des revendications 2 à 4, **caractérisée en ce que** le dispositif de limitation de pression (54) peut être réglé au moyen d'un autre dispositif d'actionnement (68) par rapport à la valeur de seuil de pression prédéfinie.

6. Alimentation hydraulique selon au moins l'une des revendications précédentes 1 à 5, **caractérisée en ce qu'**une soupape de décharge réalisée comme une autre soupape à 2/2 voies (78) est branchée en série avec la soupape à 2/2 voies (72), l'autre soupape à 2/2 voies (78) étant pilotée au moyen de la pression de signalisation de charge appliquée de manière externe de telle manière que celle-ci adopte une position ouverte en cas de dépassement d'une valeur de seuil de pression prédéfinie.
